# EUROPEAN PATENT APPLICATION

(11) **EP 4 613 390 A1**
(43) Date of publication of application: **10.09.2025**
(21) Application number: 23885561.3
(22) Date of filing: 21.10.2023
(51) Int. Cl.: B09C 1/08, C02F 1/58, C09K 3/00

(54) **AMORPHOUS CARBON-METAL IRON COMPOSITE AND PRODUCTION METHOD THEREFOR**

(30) Priority: 02.11.2022 JP 2022176321
(71) Applicant: Toda Kogyo Corp., Hiroshima 732-0828 (JP); Nakamurakiso Co., Ltd., Higashihiroshima-shi, Hiroshima 739-2301 (JP)
(72) Inventor: KATAYAMA Miwa, Otake-shi, Hiroshima 739-0652 (JP); IMAI Tomoyuki, Aki-gun, Hiroshima 735-0006 (JP); KOBAYASHI Nobuyuki, Otake-shi, Hiroshima 739-0652 (JP); OKAZAKI Seiji, Otake-shi, Hiroshima 739-0652 (JP); TAKAHASHI Shinji, Otake-shi, Hiroshima 739-0652 (JP)
(74) Representative: dompatent von Kreisler Selting Werner - Partnerschaft von Patent- und Rechtsanwälten mbB
(86) International application number: PCT/JP2023/038110
(87) International publication number: WO 2024/095801

(57) **Abstract**

The present invention provides an amorphous carbon-metallic iron composite that is safe and easy to handle, capable of maintaining activity over a long period of time, and capable of sufficiently reducing organohalogen compounds contained in soil or groundwater. The amorphous carbon-metallic iron composite includes amorphous carbon and an iron compound containing at least α iron phase. The amorphous carbon-metallic iron composite has a carbon content of 45% by weight or more and 75% by weight or less. A sum of α iron phase content and an austenite (γ iron) phase content in the amorphous carbon-metallic iron composite is 7.5% by weight or more and 55% by weight or less.

## Description

### BACKGROUND OF THE INVENTION

### (Field of the Invention)

The present invention relates to an amorphous carbon-metallic iron composite that decomposes organohalogen compounds contained in soil or groundwater and purifies the soil or the groundwater, and a purification treatment method for soil and groundwater.

### (Description of Related Art)

Aliphatic organohalogen compounds such as trichloroethylene and tetrachloroethylene are widely used for cleaning in semiconductor factories and for degreasing metals during metal processing.

Exhaust gas, fly ash, and bottom ash generated from waste incinerators that incinerate municipal and industrial waste contain dioxins, which are aromatic organohalogen compounds having extremely strong toxicity to humans, though in a trace amount. "Dioxins" is a general term for compounds in which hydrogen in dibenzo-p-dioxin, dibenzofuran, and the like is replaced with chlorine. Exhaust gas and fly ash will accumulate in the vicinity of the waste incinerator, and dioxins will remain in the soil of the surrounding area.

PCBs (polychlorinated biphenyls) are chemically and thermally stable, excellent in electrical insulation, and were widely used as insulating oils for transformers and capacitors, plasticizers, and heat carriers, but production and use of PCBs are prohibited because of their harmfulness. However, effective treatment methods for PCBs used in the past have not been established, and most of such PCBs are preserved untreated.

Since organohalogen compounds such as aliphatic organohalogen compounds and aromatic organohalogen compounds are hardly decomposable and are carcinogenic substances or substances having strong toxicity, contamination of soil and groundwater with organohalogen compounds has become a serious environmental problem.

That is, when organohalogen compounds are discharged, the organohalogen compounds will accumulate in the soil into which the compounds are discharged and the soil is contaminated with the organohalogen compounds because the organohalogen compounds are hardly decomposable, and the groundwater will also be contaminated with the organohalogen compounds. Furthermore, since the groundwater spreads to the surrounding area besides the contaminated soil, contamination by the organohalogen compounds is problematic in a wide area.

Once soil is contaminated with organohalogen compounds, land involving the soil cannot be reused and developed again. Therefore, various technical measures have been proposed as purification treatment methods for soil and groundwater contaminated with organohalogen compounds. However, efficient and economic purification technology has not been sufficiently established yet because organohalogen compounds are hardly decomposable, and large amounts of soil and groundwater are the target to be treated.

As the method for purifying soil contaminated with organohalogen compounds, a method of conducting a purification treatment using various catalysts, a method of sucking and removing vapors of the organohalogen compounds by utilizing a volatility thereof, a thermal decomposition method of excavating the soil and detoxifying the soil by heat treatment, a method using microorganisms, and the like are known. In addition, as the method for purifying groundwater contaminated with organohalogen compounds, a method of extracting the contaminated groundwater outside the soil and detoxifying the groundwater, a method of removing organohalogen compounds by pumping the groundwater, and the like are known.

Recently, PFAS such as PFOS and PFOA have been subjected to regulation in various countries. PFAS is a general term for organic fluorine compounds. PFAS are chemically stable substances which are difficult to be naturally decomposed and highly residual, so that purification treatment technology for PFAS is required.

Among the technical measures proposed as methods for purifying soil, groundwater, and wastewater contaminated with organohalogen compounds, a technical measure of mixing and making soil, groundwater, and wastewater contaminated with organohalogen compounds, come into contact with a purifying agent containing iron-based particles to detoxify the soil, groundwater, and wastewater, has been proposed (Patent Documents 1 to 9).

### [Related Document]

### [Patent Document]

[Patent Document 1] JP Laid-open Patent Publication No. 2002-161263
[Patent Document 2] JP Laid-open Patent Publication No. 2003-105313
[Patent Document 3] JP Laid-open Patent Publication No. 2003-136051
[Patent Document 4] JP Laid-open Patent Publication No. 2005-21882
[Patent Document 5] JP Laid-open Patent Publication No. 2006-326561
[Patent Document 6] JP Laid-open Patent Publication No. 2010-194450
[Patent Document 7] JP Laid-open Patent Publication No. 2010-194451
[Patent Document 8] JP Laid-open Patent Publication No. 2011-26524
[Patent Document 9] JP Laid-open Patent Publication No. 2011-46985

### SUMMARY OF THE INVENTION

Purifying agents capable of maintaining their activity over a long period of time and sufficiently reducing organohalogen compounds contained in soil or groundwater are currently the most in demand, but have not yet been obtained.

The foregoing Patent Document 1 describes iron powder for decomposition of organohalogen compounds, in which a metal selected from nickel, copper, cobalt, and molybdenum adheres to the surface and the surface other than the surface to which metal adheres is covered with an iron oxide film. However, iron powder obtained with a mill scale or iron powder obtained by atomizing molten steel with water is used, and it seems that the particle size of the iron powder is large according to the described specific surface area of the iron powder, and it is hard to say that organohalogen compounds can be sufficiently reduced.

The foregoing Patent Document 2 describes a detoxifying treatment agent for organohalogen compounds that is composed of graphite and Fe-Ni, and has a graphite content of 1 to 20% by weight and a Ni content of 0.1 to 15% by weight. However, it seems that the particle size is large, and it is hard to say that organohalogen compounds can be sufficiently reduced.

The foregoing Patent Document 3 describes metal powder for decomposition of organohalogen compounds that is composed of nickel-adhered iron particles having a phase primarily composed of iron as a base metal phase, and a phase primarily composed of nickel as an adhering metal phase. However, the particle diameter is as large as 1 to 500 µm, and it is hard to say that organohalogen compounds can be sufficiently reduced.

The foregoing Patent Document 4 describes conducting a purification treatment using iron composite particle powder composed of α-Fe and magnetite for soil and groundwater contaminated with organohalogen compounds. However, there is room for improvement to sufficiently decompose organohalogen compounds over a long period of time.

The foregoing Patent Document 5 describes iron-based powder for purification in which Ni microparticles having an average particle diameter of 1 to 50 nm are adhered to the surface of iron powder primarily composed of iron. However, the average particle diameter of the iron-based particles is as large as 65 µm, and it is hard to say that organohalogen compounds can be sufficiently reduced.

The foregoing Patent Document 6 describes a purification method for organic halides in which iron powder, and nickel sulfate and/or nickel chloride in less than 0.1% by weight with respect to the iron powder are mixed with soil, wastewater, or groundwater contaminated with organic halides. The foregoing Patent Document 7 describes a purification method for organic halides, in which partial alloy powder having a partial alloy phase of iron and nickel inside and/or on the surface of iron powder, and nickel sulfate and/or nickel chloride in less than 0.1% by weight with respect to the partial alloy powder are mixed with soil, wastewater, or groundwater contaminated with the organic halides. However, the particle diameters of the iron powder and the partial alloy powder are relatively large, and it is hard to say that organohalogen compounds can be sufficiently reduced with a small amount of addition.

The foregoing Patent Document 8 describes a material for decomposing organohalogen compounds. The material is composed of iron powder whose surface is coated with a metal such as nickel that is nobler than iron. However, the particle diameter of the iron powder is large, and it is hard to say that organohalogen compounds can be sufficiently reduced with a small amount of addition.

The foregoing Patent Document 9 describes a treatment agent for decomposing organic halides. The agent is composed of iron powder in which nickel is precipitated on the surface by grinding or strongly stirring iron powder and a water-soluble nickel aqueous solution, and further, the nickel and iron are partially alloyed. However, the particle diameter of iron powder is large, and it is hard to say that organohalogen compounds can be sufficiently reduced with a small amount of addition.

It is an object of the present invention to provide an amorphous carbon-metallic iron composite that is safe and easy to handle, maintains activity over a long period of time, and can sufficiently reduce organohalogen compounds contained in soil or groundwater, a method for producing the same, and a purification treatment method for soil and groundwater using the amorphous carbon-metallic iron composite.

The technical object can be achieved by the present invention as follows.

That is, the present invention is an amorphous carbon-metallic iron composite including amorphous carbon and an iron compound containing at least α iron phase, the amorphous carbon-metallic iron composite has a carbon content of 45% by weight or more and 75% by weight or less, and a sum of α iron phase content and austenite (γ iron) phase content in the amorphous carbon-metallic iron composite is 7.5% by weight or more and 55% by weight or less (present invention 1).

The present invention is the amorphous carbon-metallic iron composite according to the present invention 1, in which the amorphous carbon-metallic iron composite has a BET specific surface area of 0.5 m²/g or more and 80 m²/g or less (present invention 2).

The present invention is the amorphous carbon-metallic iron composite according to the present invention 1 or 2, in which the α iron has a crystallite size of 40 nm or more and 140 nm or less (present invention 3).

The present invention is the amorphous carbon-metallic iron composite according to the present invention 1 or 2, in which the amorphous carbon-metallic iron composite has a bulk density of 0.9 g/cm³ or more and 1.3 g/cm³ or less (present invention 4).

The present invention is a purification treatment method for soil and groundwater, including subjecting soil contaminated with organohalogen compounds or groundwater contaminated with organohalogen compounds to a purification treatment using the amorphous carbon-metallic iron composite according to the present invention 1 or 2 (present invention 5).

The present invention is an insolubilizing agent for heavy metals contained in soil or groundwater, including the amorphous carbon-metallic iron composite according to the present invention 1 or 2, as an active ingredient (present invention 6).

The present invention is a method for producing the amorphous carbon-metallic iron composite according to the present invention 1 or 2, including: a precursor producing step of softening a carbon raw material by imparting energy to produce a precursor that embeds the iron raw material; and a heat treatment step of heat treating the precursor to reduce at least part of the iron raw material (present invention 7).

The present invention is a method for producing a purifying agent for soil and groundwater, including: a precursor producing step of softening a carbon raw material by imparting energy to produce a precursor that embeds the iron raw material; and a heat treatment step of heat treating the precursor to reduce at least part of the iron raw material (present invention 8).

### EFFECT OF THE INVENTION

The amorphous carbon-metallic iron composite according to the present invention is safe and easy to handle, capable of maintaining activity over a long period of time, and capable of sufficiently reducing organohalogen compounds contained in soil or groundwater, and therefore is suitable as a purifying agent.

### BRIEF DESCRIPTION OF THE DRAWINGS

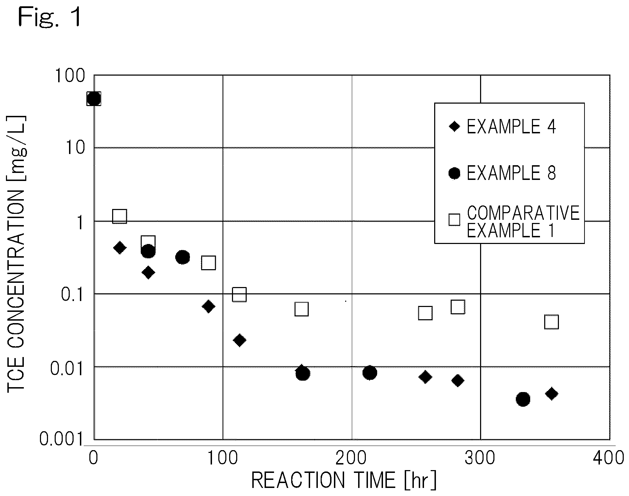

Fig. 1 shows measurement results of TCE decomposition rates using amorphous carbon-metallic iron composites of the present invention.

### DESCRIPTION OF EMBODIMENTS

Detailed description of configurations of the present invention is as follows.

An amorphous carbon-metallic iron composite according to the present invention is an amorphous carbon-metallic iron composite composed of amorphous carbon and an iron compound containing at least α iron phase, and has a carbon content of 45% by weight or more and 75% by weight or less. If the carbon content is less than 45% by weight, the iron compound becomes easily oxidized. On the other hand, if the carbon content exceeds 75% by weight, the activity as a purifying agent decreases.

In the amorphous carbon-metallic iron composite according to the present invention, the sum of α iron phase content and an austenite (γ iron) phase content is 7.5% by weight or more, and preferably 8.0% by weight or more. If the sum of the α iron phase content and the austenite (γ iron) phase content is less than 7.5% by weight, the activity as a purifying agent decreases. On the other hand, the upper limit of the sum of the α iron phase content and the austenitic (γ iron) phase content is 55% by weight.

The amorphous carbon-metallic iron composite according to the present invention has a BET specific surface area of preferably 0.5 m²/g or more and 80 m² or less, and more preferably 1.0 m²/g or more and 75 m²/g or less. If the BET specific surface area is less than 0.5 m²/g, contact points with the substance to be purified decrease. On the other hand, if the BET specific surface area exceeds 80 m²/g, the iron compound contained in the composite becomes easily oxidized.

The amorphous carbon-metallic iron composite according to the present invention has a crystallite size of α iron of preferably 140 nm or less, and more preferably 137 nm or less. The smaller the crystallite size of α iron, the better, and hence, the lower limit is not particularly limited, but from the viewpoint of industrial productivity, 40 nm or more is appropriate. On the other hand, if the crystallite size of α iron exceeds 140 nm, the activity as a purifying agent decreases.

The amorphous carbon-metallic iron composite according to the present invention has a bulk density of preferably 0.9 g/cm³ or more and 1.3 g/cm³ or less, and more preferably 0.95 g/cm³ or more and 1.25 g/cm³ or less. If the bulk density is less than 0.9 g/cm³, compounding of amorphous carbon and metallic iron is insufficient. On the other hand, if the bulk density exceeds 1.3 g/cm³, contact points with the substance to be purified decrease.

The amorphous carbon-metallic iron composite according to the present invention preferably has a 10% particle diameter (D10) of 7 µm or more and 50 µm or less, and a 50% particle diameter (D50) of 15 µm or more and 100 µm or less. If the D10 is less than 7 µm and/or the D50 is less than 15 µm, dust is likely to fly during handling. On the other hand, if the D10 exceeds 50 µm and/or the D50 exceeds 100 µm, contact points with the target substance to be purified decrease.

Next, a method for producing the amorphous carbon-metallic iron composite of the present invention is described. A production process of the amorphous carbon-metallic iron composite according to the present invention includes a precursor producing step of softening a carbon raw material by imparting energy to produce a precursor that embeds the iron raw material, and a heat treatment step of heat treating the precursor to reduce at least part of the iron raw material. Optionally, a coating step of providing the precursor with a coating layer can be added. The coating step may be conducted between the precursor producing step and the heat treatment step, or may be conducted after the heat treatment step.

### <Precursor producing step>

The carbon raw material in the present invention is not particularly limited as long as the material is softened by adding thermal energy or mechanical energy, and a part of the material is thermally decomposed by heating at 400°C or higher under an inert atmosphere, and 70% by weight or more of the material remains as amorphous carbon after the heat treatment. However, the carbon raw material is preferably a solid compound containing hydrocarbon.

Examples of such a carbon raw material include those derived from petroleum or coal, and those derived from resin or synthetic resin. Petroleum coke obtained by pyrolysis and polycondensation by heating heavy oil such as distilled residual oil to about 300°C to 700°C is preferred. Petroleum coke includes fluid coke and delayed coke, and delayed coke includes raw coke and calcined coke (calcine coke). The carbon raw material in the present invention preferably has a volatile content of 8% or more measured in accordance with JISM8812.

The iron raw material in the present invention is not particularly limited, but a substance that exhibits at least an iron-containing compound phase in an X-ray diffraction pattern is preferred. Examples of the iron-containing compound include metallic iron such as ferrite (α-Fe) and austenite (y-Fe), iron oxides such as magnetite (Fe₃O₄), maghemite (γ-Fe₂O₃), hematite (α-Fe₂O₃), and wüstite (FeO), iron hydroxides such as goethite (α-FeOOH), iron oxalate (FeC₂O₄), iron nitrate (Fe (NO₃)₂), and iron chloride (FeCl₂), and the like. Magnetite, hematite, or goethite is particularly preferred.

Hereinafter, a method for producing a precursor by mechanical energy using coke powder having a volatile content of about 13% as a carbon raw material and hematite powder as an iron raw material will be specifically described. However, the amorphous carbon-metallic iron composite of the present invention is not restricted by the following production method.

The coke powder used as a carbon raw material in the precursor producing step has a D50 of preferably 1 µm or more and 30 µm or less, and more preferably 3 µm or more and 25 µm or less. If the D50 of the coke powder is smaller than 1 µm, it is not preferable because the compounding treatment becomes difficult. If the D50 of the coke powder exceeds 30 µm, it is not preferable because the carbon content in each particle of the amorphous carbon-metallic iron composite tends to vary.

The size of the hematite powder used as an iron raw material in the precursor producing step is small compared with the coke powder used as a carbon raw material, and the D50 of the hematite powder is preferably 0.1 µm or more and 10 µm or less, and more preferably 0.5 µm or more and 5 µm or less. If the D50 of the hematite powder is smaller than 0.1 µm, it is not preferable because the compounding treatment becomes difficult. If the D50 of the hematite powder exceeds 10 µm, it is not preferable because the iron content in each particle of the amorphous carbon-metallic iron composite tends to vary.

The hematite powder used as an iron raw material in the precursor producing step has a BET specific surface area of preferably 500 m²/g or less, more preferably 300 m²/g or less, and further preferably 150 m²/g or less. If the BET specific surface area of the hematite powder exceeds 500 m²/g, it is not preferable because the compounding treatment becomes difficult. The lower limit of the BET specific surface area of the hematite powder is about 1 m²/g.

It is preferred that the precursor producing method is a compounding treatment of imparting mechanical energy to mixed powder of a carbon raw material and an iron raw material. It is especially preferred that the precursor producing method is a method of imparting mechanical energy while mixing and dispersing powder by fluidizing the powder. Fluidization of the powder causes shearing, compression, collision, friction, and the like, and the carbon raw material and the iron raw material can be efficiently compounded.

Examples of a device capable of imparting mechanical energy such as shearing, compression, collision, friction, and the like to powder include, in addition to edge runners, kneaders, and mixing granulators, particle compounding devices such as HYBRIDIZATION SYSTEM (manufactured by Nara Machinery Co., Ltd.), MECHANO FUSION (manufactured by Hosokawa Micron Corporation), NOBILTA (manufactured by Hosokawa Micron Corporation), and COMPOSI (manufactured by Nippon Coke & Engineering. Co., Ltd.).

When mixed powder of the carbon raw material and the iron raw material is treated in the precursor producing step, a mixing ratio of the carbon raw material and the iron raw material is preferably 1 : 0.25 to 1.3 by weight ratio. As long as the content ratio of the carbon raw material and the iron raw material is 1 : 0.5 to 1.25 by weight, the amount and the order of input of the raw materials in the compounding treatment do not matter. Therefore, regarding the compounding treatment, all the raw materials may be compounded at once. Alternatively, while part of the raw materials is subjected to the compounding treatment or after part of the raw materials is subjected to the compounding treatment, the remainder of the raw materials may be additionally added to conduct a compounding treatment. The raw material to be additionally added may be the carbon raw material only, the iron raw material only, or mixed powder of the carbon raw material and the iron raw material.

The temperature of the powder in the treatment of imparting mechanical energy is controlled to preferably 60°C or more and less than 400°C, more preferably 80°C or more and less than 300°C, and particularly preferably 100°C or more and less than 250°C. Temperatures lower than 60°C are not preferable because the carbon raw material does not soften and compounding becomes difficult. High temperatures of 400°C or more are not preferable because there is a risk of ignition or the like.

In the precursor producing step, it is preferred to compress and compound the raw material so that the bulk density of the precursor is 1.2 times or more than that of the raw material powder or the raw material mixed powder. The bulk density of the precursor is more preferably 1.5 times or more, further preferably 1.75 times or more, and particularly preferably 2 times or more than that of the raw material powder or the raw material mixed powder. If the bulk density of the precursor is less than 1.2 times that of the raw material powder or the raw material mixed powder, it is not preferable because the compounding is insufficient. The upper limit is about 5 times.

### <Heat treatment step>

The method of heat treatment is not particularly limited as long as at least part of the iron raw material in the precursor can be reduced. For example, a method of conducting heat treatment under a reducing atmosphere such as hydrogen, a method of thermally decomposing at least part of the raw material under an inert atmosphere or under a non-oxidizing atmosphere to cause a reduction reaction, and the like can be recited. Although heat treatment conditions depend on the kinds of the raw materials used and the mixing ratio, it is preferred that the maximum temperature be 400°C or more and 1600°C or less, and the retention time at the maximum temperature be 10 hours or less.

### <Coating step>

The precursor or the amorphous carbon-metallic iron composite may be provided with a coating layer. The coating layer prevents oxidation of metallic iron, and can further enhance the preservability and the safety. Materials of the coating layer and the coating method are not particularly limited. The coating step may be conducted between the precursor producing step and the heat treatment step, or may be conducted after the heat treatment step. For example, a method of compounding the carbon raw material and the iron raw material in the precursor producing step, and then adding the carbon raw material for the coating layer and conducting the heat treatment, can be recited.

Next, a purification treatment method for purifying soil contaminated with organohalogen compounds or groundwater contaminated with organohalogen compounds using an amorphous carbon-metallic iron composite according to the present invention as a purifying agent, is described.

It is generally preferred that a purification treatment for soil contaminated with organohalogen compounds or groundwater contaminated with organohalogen compounds is conducted by an in-situ decomposition method that decomposes the contained contaminants directly in the ground.

In the in-situ decomposition method, a method of introducing the purifying agent into the ground by direct permeation or through a borehole with gas such as high pressure air or nitrogen or water as a medium, or a method of stirring and mixing the purifying agent and the contaminated soil using a drilling stirring mixer, is employed. Since the amorphous carbon-metallic iron composite of the present invention is a powder, the composite may be used as it is or as an amorphous carbon-metallic iron composite dispersed in water.

When the amorphous carbon-metallic iron composite of the present invention is used as an amorphous carbon-metallic iron composite dispersed in water, the concentration (solid content concentration) of the amorphous carbon-metallic iron composite is preferably 0.01 to 25% by weight.

The amount of addition of the amorphous carbon-metallic iron composite (solid content) can be appropriately selected according to the degree of contamination of soil or groundwater due to organohalogen compounds. When contaminated soil is targeted, the amount of addition is preferably 0.01 to 10 parts by weight, and more preferably 0.05 to 5 parts by weight with respect to 100 parts by weight of soil. If the amount of addition is less than 0.01 parts by weight, the objective effect of the present invention cannot be sufficiently obtained. If the amount of addition exceeds 10 parts by weight, it is uneconomical although the purification effect is improved. Further, when contaminated groundwater is targeted, the amount of addition is preferably 0.01 to 80 parts by weight, and more preferably 0.05 to 50 parts by weight with respect to 100 parts by weight of groundwater.

### <Function>

An important point in the present invention is that the amorphous carbon-metallic iron composite according to the present invention is capable of maintaining its activity over a long period of time and capable of sufficiently reducing organohalogen compounds contained in soil or groundwater.

Although the reasons why the activity can be maintained over a long period of time and organohalogen compounds contained in soil or groundwater can be sufficiently reduced are not yet clear, the following explanation is considered.

That is, in the amorphous carbon-metallic iron composite according to the present invention and the purification treatment method for soil and groundwater using the same, since the amorphous carbon and the metallic iron are compounded, rapid oxidation of the metallic iron when the composite comes into contact with soil or water is inhibited, and the metallic iron having high activity as the purifying agent is kept in a low oxidized state. The inventors consider that the presence of plenty of metallic iron in a low oxidized state in soil or in water leads to sufficient reduction of organohalogen compounds. It is also supposed that as the contact time with the soil or water increases, the amorphous carbon-metallic iron composite deforms and new active surfaces appear, resulting in the activity lasting over a long period of time.

As described above, deterioration due to oxidation of metallic iron can be inhibited by compounding amorphous carbon and metallic iron. In the amorphous carbon-metallic iron composite according to the present invention, there is little metallic iron exposed on the surface, and the metallic iron fine particles are firmly adhered to the amorphous carbon, so that it is difficult for gas and liquid to penetrate inside. Therefore, oxidation reaction is minimized even in an oxidizing atmosphere such as air or water, and ignition due to runaway heat generated by oxidation can be inhibited by amorphous carbon disposed between metallic iron fine particles. As a result, the amorphous carbon-metallic iron composite according to the present invention is not a self-heating substance and can be easily handled.

### EXAMPLES

Typical embodiments of the present invention are as follows.

### <Measurement and evaluation methods>

### (a) Measurements of 10% particle diameter D10 and 50% particle diameter D50

Measurement was conducted using a laser diffraction scattering particle size distribution measuring apparatus, "LMS-2000e" (manufactured by Malvern Panalytical).

### (b) Measurement of specific surface area

Measurement was conducted using a specific surface area measuring device, "Multisorb 16" (manufactured by Quantachrome Instruments), by the BET method.

### (c) Measurement of bulk density

After lightly putting the sample into a container with a spoon until the sample was heaped, the heaped portion was scraped off with a spatula without imparting vibration. Then, the weight of the content of the container was measured, and the weight was divided by the volume of the container to calculate bulk density.

### (d) Measurement of carbon amount

Measurement was conducted using a carbon and sulfur analyzer, "EMIA-920V2" (manufactured by HORIBA).

### (e) Measurement of crystalline phase content and crystallite size

Measurements were conducted with an X-ray diffractometer, "D8ADVANCE" (manufactured by Bruker AXS), and a crystalline phase content and a crystallite size in the sample were calculated by Rietveld analysis.

### (f) Evaluation of purification treatment of organohalogen compounds in imitated groundwater and wastewater

### <Preparation of calibration curve: quantification of organohalogen compounds>

Concentration of the organohalogen compounds was calculated based on the calibration curve that had been prepared in advance according to the following procedure.

Trichloroethylene (TCE: C₂HCl₃): molecular weight of 131.39, reagent grade (99.5%), density (20°C) of 1.461 to 1.469 g/mL

Trichloroethylene is set to three levels of 1.0 µL, 2.0 µL, and 3.5 µL. 40 mL of ion-exchanged water is added to a 100 mL brown vial bottle, and subsequently each level amount of trichloroethylene is injected. The vial bottle is immediately lidded with a rubber stopper with a fluorine resin liner, and tightly fastened with an aluminum seal. After leaving the vial bottle to stand at 30°C for 20 minutes, 0.5 mL of gas in the headspace is collected with a syringe and trichloroethylene is measured using "SRI8610C" (manufactured by SRI). Assuming that trichloroethylene is not decomposed at all, the relationship between the amount of addition and the peak area is determined. The column at this time is a capillary column, Ultra AllOY-624 (manufactured by Frontier Laboratories, liquid phase: cyanopropylphenyl methylpolysiloxane), and He gas (25 mL/min) is used as the carrier gas. After holding at 50°C for 1 minute, the temperature is raised to 120°C at a rate of 10°C/min, and the gas is analyzed.

### <Production of amorphous carbon-metallic iron composite dispersion>

At first, 100 g of amorphous carbon-metallic iron composite powder and 300 g of ion-exchanged water were primarily mixed in a jar tester for 1 minute, and then the mixture was ground and mixed in a vertical batch wet bead mill (manufactured by AIMEX, effective volume: 800 mL, grinding media: 2 mmφ glass beads) for 60 minutes to prepare an amorphous carbon-metallic iron composite dispersion containing 25% by weight (solids concentration) of the amorphous carbon-metallic iron composite particles.

### <Preparation of sample for measurement of organohalogen compounds>

A 100 mL brown vial bottle was charged with 0.528 g of amorphous carbon-metallic iron composite dispersion and 39.6 mL of ion-exchanged water, and then 1.3 µL of trichloroethylene was injected. The vial bottle was immediately lidded with a rubber stopper with a fluorine resin liner, and tightly fastened with an aluminum seal, and the standing reaction was started.

### <Evaluation method of decomposition reaction of organohalogen compounds>

The vial bottle was left to stand at 30°C, and after a predetermined reaction time, 0.5 mL of gas was separated from the headspace inside the vial bottle with a syringe and the trichloroethylene (TCE) concentration was measured using the "SRI8610C" (manufactured by SRI). The sample in which the TCE concentration became less than 0.01 mg/L after 240 hours (10 days) after the start of the reaction was evaluated as Good, the sample in which the TCE concentration became less than 0.01 mg/L after 300 hours (12.5 days) after the start of the reaction was evaluated as FAIR, and the sample in which the TCE concentration was 0.01 mg/L or more even 300 hours (12.5 days) after the start of the reaction was evaluated as Bad.

### (g) Evaluation of purification treatment of organic fluorine compounds (PFAS) in imitated contaminated water

### <Production of amorphous carbon-metallic iron composite dispersion>

A 210 mL mayonnaise jar was charged with 25 g of amorphous carbon-metallic iron composite powder, 75 g of ion-exchanged water, and 180 g of glass beads with a diameter of 2 mm, and shaken with a test disperser (paint shaker) manufactured by Toyo Seiki Co., Ltd. for 3 hours. Then, the beads were removed by using a mesh of 1 mm to prepare an amorphous carbon-metallic iron composite dispersion containing 25% by weight of amorphous carbon-metallic iron composite particles.

### 0076 <Preparation of sample for measurement of organic fluorine compounds using amorphous carbon-metallic iron composite powder>

A 250 mL polypropylene container was charged with 2.4 g of amorphous carbon-metallic iron composite powder and 105.6 mL of ion-exchanged water, and then injected with 12 mL of 1 mg/L aqueous solution of PFOA, PFOS, and PFHxS. The container was lidded and the entirety was shaken to start a standing reaction.

### <Preparation of sample for measurement of organic fluorine compounds using amorphous carbon-metallic iron composite dispersion>

A 250 mL polypropylene container was charged with 9.6 g of amorphous carbon-metallic iron composite dispersion and 99.8 mL of ion-exchanged water, and then injected with 12 mL of 1 mg/L aqueous solution of PFOA, PFOS, and PFHxS. The container was lidded and the entirety was shaken to start a standing reaction.

### <Preparation of sample for measurement of organic fluorine compounds not containing amorphous carbon-metallic iron composite>

A 250 mL polypropylene container was charged with 108 mL of ion-exchanged water, and then injected with 12 mL of 1 mg/L aqueous solution of PFOA, PFOS, and PFHxS. The container was lidded and the entirety was shaken to start a standing reaction.

### <Evaluation method of removing reaction of organic fluorine compounds>

The polypropylene container was left to stand at room temperature, and a filtrate after a predetermined reaction time was measured by LC-MS/MS.

### <Production of amorphous carbon-metallic iron composite>

### <Amorphous carbon-metallic iron composite 1>

10.4 kg of coke powder having a D50 of 19.4 µm and 10.4 kg of hematite powder having a BET specific surface area of 105 m²/g were weighed, and lightly mixed. The mixed powder had a bulk density of 0.462 g/cm³. The mixed powder was subjected to a compounding treatment by a mechanochemical treatment in which shear force and compressive force were added, and subsequently 5.2 kg of the coke powder was additionally treated to obtain a precursor 1. The precursor 1 had a D50 of 53.02 µm and a bulk density of 0.951 g/cm³, and the bulk density of the precursor 1 was 2.059 times the bulk density of the mixed powder.

Next, the precursor 1 was heat-treated at 800°C for 5 hours in a nitrogen atmosphere to obtain an amorphous carbon-metallic iron composite 1. The amorphous carbon-metallic iron composite 1 had a BET specific surface area of 29.6 m²/g, a carbon content of 64.4 wt%, a bulk density of 1.110 g/cm³, a content of α iron phase + γ iron phase of 24.6 wt%, and a crystallite size of α iron of 104.3 nm. The amorphous carbon-metallic iron composite 1 had a D10 of 23.5 µm and a D50 of 49.8 µm.

### <Amorphous carbon-metallic iron composite 2>

10.4 kg of coke powder having a D50 of 19.4 µm and 10.4 kg of hematite powder having a BET specific surface area of 105 m²/g were weighed, and lightly mixed. The mixed powder had a bulk density of 0.459 g/cm³. The mixed powder was subjected to a compounding treatment by a mechanochemical treatment in which shear force and compressive force were added, and subsequently 5.2 kg of the coke powder was additionally treated to obtain a precursor 2. The precursor 2 had a D50 of 52.27 µm and a bulk density of 0.945 g/cm³, and the bulk density of the precursor 2 was 2.059 times the bulk density of the mixed powder.

Next, the precursor 2 was heat-treated at 800°C for 5 hours in a nitrogen atmosphere to obtain an amorphous carbon-metallic iron composite 2. The amorphous carbon-metallic iron composite 2 had a BET specific surface area of 28.5 m²/g, a carbon content of 62.5 wt%, a bulk density of 1.125 g/cm³, a content of α iron phase + γ iron phase of 18.3 wt%, and a crystallite size of α iron of 127.1 nm.

### <Amorphous carbon-metallic iron composite 3>

10.4 kg of coke powder having a D50 of 19.4 µm and 10.4 kg of hematite powder having a BET specific surface area of 105 m²/g were weighed, and lightly mixed. The mixed powder had a bulk density of 0.463 g/cm³. The mixed powder was subjected to a compounding treatment by a mechanochemical treatment in which shear force and compressive force were added, and subsequently 5.2 kg of the coke powder was added in the treatment to obtain a precursor 3. The precursor 3 had a D50 of 37.90 µm and a bulk density of 0.927 g/cm³, and the bulk density of the precursor 3 was 2.003 times the bulk density of the mixed powder.

Next, the precursor 3 was heat-treated at 800°C for 5 hours in a nitrogen atmosphere, and the temperature lowering rate after the heat treatment was controlled to about 20°C/hr to obtain an amorphous carbon-metallic iron composite 3. The amorphous carbon-metallic iron composite 3 had a BET specific surface area of 49.5 m²/g, a carbon content of 63.3 wt%, a bulk density of 1.002 g/cm³, a content of α iron phase + γ iron phase of 36.7 wt%, and a crystallite size of α iron of 133.5 nm.

### <Amorphous carbon-metallic iron composite 4>

1.2 kg of coke powder having a D50 of 18.5 µm and 1.2 kg of hematite powder having a BET specific surface area of 103 m²/g were weighed, and lightly mixed. The mixed powder had a bulk density of 0.461 g/cm³. The mixed powder was subjected to a compounding treatment by a mechanochemical treatment in which shear force and compressive force were added, and subsequently 0.6 kg of the coke powder was added in the treatment to obtain a precursor 4. The precursor 4 had a D50 of 42.04 µm and a bulk density of 0.962 g/cm³, and the bulk density of the precursor 4 was 2.084 times the bulk density of the mixed powder.

Next, the precursor 4 was heat-treated at 800°C for 5 hours in a nitrogen atmosphere to obtain an amorphous carbon-metallic iron composite 4. The amorphous carbon-metallic iron composite 4 had a BET specific surface area of 5.6 m²/g, a carbon content of 66.8 wt%, a bulk density of 1.118 g/cm³, a content of α iron phase + γ iron phase of 21.4 wt%, and a crystallite size of α iron of 51.0 nm.

### <Amorphous carbon-metallic iron composite 5>

The precursor 4 was heat-treated at 850°C for 5 hours in a nitrogen atmosphere to obtain an amorphous carbon-metallic iron composite 5. The amorphous carbon-metallic iron composite 5 had a BET specific surface area of 13.9 m²/g, a carbon content of 68.5 wt%, a bulk density of 1.111 g/cm³, a content of α iron phase + γ iron phase of 31.5 wt%, and a crystallite size of α iron of 55.0 nm.

### <Amorphous carbon-metallic iron composite 6>

1.8 kg of coke powder having a D50 of 19.0 µm and 1.2 kg of hematite powder having a BET specific surface area of 107 m²/g were weighed, and lightly mixed. The mixed powder had a bulk density of 0.480 g/cm³. The mixed powder was subjected to a compounding treatment by a mechanochemical treatment in which shear force and compressive force were added to obtain a precursor 6. The precursor 6 had a D50 of 40.22 µm and a bulk density of 0.984 g/cm³, and the bulk density of the precursor 6 was 2.049 times the bulk density of the mixed powder.

Next, the precursor 6 was heat-treated at 750°C for 5 hours in a nitrogen atmosphere to obtain an amorphous carbon-metallic iron composite 6. The amorphous carbon-metallic iron composite 6 had a BET specific surface area of 13.9 m²/g, a carbon content of 64.1 wt%, a bulk density of 1.109 g/cm³, a content of α iron phase + γ iron phase of 23.7 wt%, and a crystallite size of α iron of 49.9 nm.

### <Amorphous carbon-metallic iron composite 7>

The precursor 6 was heat-treated at 800°C for 5 hours in a nitrogen atmosphere to obtain an amorphous carbon-metallic iron composite 7. The amorphous carbon-metallic iron composite 7 had a BET specific surface area of 13.5 m²/g, a carbon content of 65.1 wt%, a bulk density of 1.117 g/cm³, a content of α iron phase + γ iron phase of 29.8 wt%, and a crystallite size of α iron of 51.8 nm.

### <Amorphous carbon-metallic iron composite 8>

1.8 kg of coke powder having a D50 of 18.2 µm and 1.2 kg of hematite powder having a BET specific surface area of 107 m²/g were weighed, and lightly mixed. The mixed powder had a bulk density of 0.479 g/cm³. The mixed powder was subjected to a compounding treatment by a mechanochemical treatment in which shear force and compressive force were added to obtain a precursor 8. The precursor 8 had a D50 of 47.73 µm and a bulk density of 1.017 g/cm³, and the bulk density of the precursor 8 was 2.122 times the bulk density of the mixed powder.

Next, the precursor 8 was heat-treated at 750°C for 5 hours in a nitrogen atmosphere to obtain an amorphous carbon-metallic iron composite 8. The amorphous carbon-metallic iron composite 8 had a BET specific surface area of 7.4 m²/g, a carbon content of 64.7 wt%, a bulk density of 1.124 g/cm³, a content of α iron phase + γ iron phase of 18.9 wt%, and a crystallite size of α iron of 55.6 nm.

### <Amorphous carbon-metallic iron composite 9>

The precursor 8 was heat-treated at 800°C for 5 hours in a nitrogen atmosphere to obtain an amorphous carbon-metallic iron composite 9. The amorphous carbon-metallic iron composite 9 had a BET specific surface area of 20.9 m²/g, a carbon content of 60.9 wt%, a bulk density of 1.126 g/cm³, a content of α iron phase + γ iron phase of 17.0 wt%, and a crystallite size of α iron of 62.3 nm.

### <Amorphous carbon-metallic iron composite 10>

1.2 kg of coke powder having a D50 of 18.5 µm and 1.2 kg of goethite powder having a BET specific surface area of 6.9 m²/g were weighed, and lightly mixed. The mixed powder had a bulk density of 0.405 g/cm³. The mixed powder was subjected to a compounding treatment by a mechanochemical treatment in which shear force and compressive force were added, and subsequently 0.6 kg of the coke powder was added in the treatment to obtain a precursor 10. The precursor 10 had a D50 of 60.65 µm and a bulk density of 0.994 g/cm³, and the bulk density of the precursor 10 was 2.454 times the bulk density of the mixed powder.

Next, the precursor 10 was heat-treated at 800°C for 5 hours in a nitrogen atmosphere to obtain an amorphous carbon-metallic iron composite 10. The amorphous carbon-metallic iron composite 10 had a BET specific surface area of 8.2 m²/g, a carbon content of 66.3 wt%, a bulk density of 1.139 g/cm³, a content of α iron phase + γ iron phase of 28.7 wt%, and a crystallite size of α iron of 115.5 nm.

### <Amorphous carbon-metallic iron composite 11>

The precursor 10 was heat-treated at 850°C for 5 hours in a nitrogen atmosphere to obtain an amorphous carbon-metallic iron composite 11. The amorphous carbon-metallic iron composite 11 had a BET specific surface area of 2.0 m²/g, a carbon content of 64.5 wt%, a bulk density of 1.171 g/cm³, a content of α iron phase + γ iron phase of 24.3 wt%, and a crystallite size of α iron of 112.6 nm.

### <Amorphous carbon-metallic iron composite 12>

The precursor 10 was heat-treated at 800°C for 5 hours in a nitrogen atmosphere, and the temperature lowering rate after the heat treatment was controlled to about 20°C/hr to obtain an amorphous carbon-metallic iron composite 12. The amorphous carbon-metallic iron composite 12 had a BET specific surface area of 2.9 m²/g, a carbon content of 63.9 wt%, a bulk density of 1.157 g/cm³, a content of α iron phase + γ iron phase of 32.9 wt%, and a crystallite size of α iron of 98.1 nm.

### <Amorphous carbon-metallic iron composite 13>

1.3 kg of coke powder having a D50 of 18.5 µm and 1.5 kg of hematite powder having a BET specific surface area of 103 m²/g were weighed, and lightly mixed. The mixed powder had a bulk density of 0.477 g/cm³. The mixed powder was subjected to a compounding treatment by a mechanochemical treatment in which shear force and compressive force were added, and subsequently 0.4 kg of the coke powder was added in the treatment to obtain a precursor 13. The precursor 13 had a D50 of 47.48 µm and a bulk density of 1.052 g/cm³, and the bulk density of the precursor 13 was 2.207 times the bulk density of the mixed powder.

Next, the precursor 13 was heat-treated at 800°C for 5 hours in a nitrogen atmosphere to obtain an amorphous carbon-metallic iron composite 13. The amorphous carbon-metallic iron composite 13 had a BET specific surface area of 18.0 m²/g, a carbon content of 57.9 wt%, a bulk density of 1.134 g/cm³, a content of α iron phase + γ iron phase of 36.3 wt%, and a crystallite size of α iron of 56.1 nm.

### <Amorphous carbon-metallic iron composite 14>

1.5 kg of coke powder having a D50 of 18.5 µm and 1.5 kg of hematite powder having a BET specific surface area of 103 m²/g were weighed, and lightly mixed. The mixed powder had a bulk density of 0.479 g/cm³. The mixed powder was subjected to a compounding treatment by a mechanochemical treatment in which shear force and compressive force were added to obtain a precursor 14. The precursor 14 had a D50 of 61.20 µm and a bulk density of 1.058 g/cm³, and the bulk density of the precursor 14 was 2.209 times the bulk density of the mixed powder.

Next, the precursor 14 was heat-treated at 800°C for 5 hours in a nitrogen atmosphere to obtain an amorphous carbon-metallic iron composite 14. The amorphous carbon-metallic iron composite 14 had a BET specific surface area of 31.4 m²/g, a carbon content of 51.0 wt%, a bulk density of 1.221 g/cm³, a content of α iron phase + γ iron phase of 19.2 wt%, and a crystallite size of α iron of 77.4 nm.

### <Amorphous carbon-metallic iron composite 15>

10.4 kg of coke powder having a D50 of 19.4 µm and 10.4 kg of hematite powder having a BET specific surface area of 105 m²/g were weighed, and lightly mixed. The mixed powder had a bulk density of 0.459 g/cm³. The mixed powder was subjected to a compounding treatment by a mechanochemical treatment in which shear force and compressive force were added, and subsequently 5.2 kg of the coke powder was added to the treatment to obtain a precursor 15. The precursor 15 had a D50 of 52.27 µm and a bulk density of 0.945 g/cm³, and the bulk density of the precursor 15 was 2.059 times the bulk density of the mixed powder.

Next, the precursor 15 was heat-treated at 800°C for 5 hours in a nitrogen atmosphere to obtain an amorphous carbon-metallic iron composite 15. The amorphous carbon-metallic iron composite 15 had a BET specific surface area of 27.0 m²/g, a carbon content of 61.9 wt%, a bulk density of 1.122 g/cm³, a content of α iron phase + γ iron phase of 14.0 wt%, and a crystallite size of α iron of 135.7 nm.

### <Amorphous carbon-metallic iron composite 16>

10.4 kg of coke powder having a D50 of 19.4 µm and 10.4 kg of hematite powder having a BET specific surface area of 105 m²/g were weighed, and lightly mixed. The mixed powder had a bulk density of 0.460 g/cm³. The mixed powder was subjected to a compounding treatment by a mechanochemical treatment in which shear force and compressive force were added, and subsequently 5.2 kg of the coke powder was added to the treatment to obtain a precursor 16. The precursor 16 had a D50 of 36.81 µm and a bulk density of 0.911 g/cm³, and the bulk density of the precursor 16 was 1.980 times the bulk density of the mixed powder.

Next, the precursor 16 was heat-treated at 800°C for 5 hours in a nitrogen atmosphere, and the temperature lowering rate after the heat treatment was controlled to about 20°C/hr to obtain an amorphous carbon-metallic iron composite 16. The amorphous carbon-metallic iron composite 16 had a BET specific surface area of 49.3 m²/g, a carbon content of 64.4 wt%, a bulk density of 1.018 g/cm³, a content of α iron phase + γ iron phase of 35.6 wt%, and a crystallite size of α iron of 137.0 nm.

### <Amorphous carbon-metallic iron composite 17>

10.4 kg of coke powder having a D50 of 19.4 µm and 10.4 kg of hematite powder having a BET specific surface area of 105 m²/g were weighed, and lightly mixed. The mixed powder had a bulk density of 0.463 g/cm³. The mixed powder was subjected to a compounding treatment by a mechanochemical treatment in which shear force and compressive force were added, and subsequently 5.2 kg of the coke powder was additionally treated to obtain a precursor 17. The precursor 17 had a D50 of 37.90 µm and a bulk density of 0.927 g/cm³, and the bulk density of the precursor 17 was 2.003 times the bulk density of the mixed powder.

Next, the precursor 17 was heat-treated at 800°C for 5 hours in a nitrogen atmosphere, and the temperature lowering rate after the heat treatment was controlled to about 20°C/hr to obtain an amorphous carbon-metallic iron composite 17. The amorphous carbon-metallic iron composite 17 had a BET specific surface area of 48.3 m²/g, a carbon content of 63.4 wt%, a bulk density of 1.019 g/cm³, a content of α iron phase + γ iron phase of 36.6 wt%, and a crystallite size of α iron of 136.5 nm.

### <Amorphous carbon-metallic iron composite 18>

1.8 kg of coke powder having a D50 of 19.0 µm and 0.6 kg of hematite powder having a BET specific surface area of 107 m²/g were weighed, and lightly mixed. The mixed powder had a bulk density of 0.501 g/cm³. The mixed powder was subjected to a compounding treatment by a mechanochemical treatment in which shear force and compressive force were added, and subsequently 0.6 kg of the hematite powder was added to the treatment to obtain a precursor 18. The precursor 18 had a D50 of 43.54 µm and a bulk density of 0.995 g/cm³, and the bulk density of the precursor 18 was 1.986 times the bulk density of the mixed powder.

Next, the precursor 18 was heat-treated at 800°C for 5 hours in a nitrogen atmosphere to obtain an amorphous carbon-metallic iron composite 18. The amorphous carbon-metallic iron composite 18 had a BET specific surface area of 5.0 m²/g, a carbon content of 63.1 wt%, a bulk density of 1.145 g/cm³, a content of α iron phase + γ iron phase of 10.1 wt%, and a crystallite size of α iron of 60.1 nm.

### <Amorphous carbon-metallic iron composite 19>

10.4 kg of coke powder having a D50 of 19.4 µm and 10.4 kg of hematite powder having a BET specific surface area of 105 m²/g were weighed, and lightly mixed. The mixed powder had a bulk density of 0.460 g/cm³. The mixed powder was subjected to a compounding treatment by a mechanochemical treatment in which shear force and compressive force were added, and subsequently 5.2 kg of the coke powder was additionally treated to obtain a precursor 19. The precursor 19 had a D50 of 36.36 µm and a bulk density of 0.929 g/cm³, and the bulk density of the precursor 19 was 2.018 times the bulk density of the mixed powder.

Next, the precursor 19 was heat-treated at 800°C for 5 hours in a nitrogen atmosphere, and the temperature lowering rate after the heat treatment was controlled to about 20°C/hr to obtain an amorphous carbon-metallic iron composite 19. The amorphous carbon-metallic iron composite 19 had a BET specific surface area of 44.2 m²/g, a carbon content of 64.4 wt%, a bulk density of 1.023 g/cm³, a content of α iron phase + γ iron phase of 35.6 wt%, and a crystallite size of α iron of 140.7 nm.

### <Amorphous carbon-metallic iron composite 20>

10.4 kg of coke powder having a D50 of 19.4 µm and 10.4 kg of hematite powder having a BET specific surface area of 105 m²/g were weighed, and lightly mixed. The mixed powder had a bulk density of 0.462 g/cm³. The mixed powder was subjected to a compounding treatment by a mechanochemical treatment in which shear force and compressive force were added, and subsequently 5.2 kg of the coke powder was additionally added to the treatment to obtain a precursor 20. The precursor 20 had a D50 of 40.15 µm and a bulk density of 0.939 g/cm³, and the bulk density of the precursor 20 was 2.032 times the bulk density of the mixed powder.

Next, the precursor 20 was heat-treated at 800°C for 5 hours in a nitrogen atmosphere to obtain an amorphous carbon-metallic iron composite 20. The amorphous carbon-metallic iron composite 20 had a BET specific surface area of 31.3 m²/g, a carbon content of 61.7 wt%, a bulk density of 1.106 g/cm³, a content of α iron phase + γ iron phase of 18.4 wt%, and a crystallite size of α iron of 145.8 nm.

### <Amorphous carbon-metallic iron composite 21>

The precursor 18 was heat-treated at 750°C for 5 hours in a nitrogen atmosphere to obtain an amorphous carbon-metallic iron composite 21. The amorphous carbon-metallic iron composite 21 had a BET specific surface area of 1.9 m²/g, a carbon content of 60.6 wt%, a bulk density of 1.178 g/cm³, a content of α iron phase + γ iron phase of 4.8 wt%, and a crystallite size of α iron of 69.2 nm. The amorphous carbon-metallic iron composite 21 does not belong to the amorphous carbon-metallic iron composite according to the present invention because the content of α iron phase + γ iron phase is less than 7.5 wt%.

### <Amorphous carbon-metallic iron composite 22>

1.5 kg of coke powder having a D50 of 18.5 µm and 1.2 kg of hematite powder having a BET specific surface area of 103 m²/g were weighed, and lightly mixed. The mixed powder had a bulk density of 0.465 g/cm³. After subjecting 0.3 kg of the coke powder to a compounding treatment by a mechanochemical treatment in which shear force and compressive force were added, the aforementioned mixed powder was added and a compounding treatment by the mechanochemical treatment was further conducted to obtain a precursor 22. The precursor 22 had a D50 of 48.47 µm and a bulk density of 0.977 g/cm³, and the bulk density of the precursor 22 was 2.100 times the bulk density of the mixed powder.

Next, the precursor 22 was heat-treated at 750°C for 5 hours in a nitrogen atmosphere to obtain an amorphous carbon-metallic iron composite 22. The amorphous carbon-metallic iron composite 22 had a BET specific surface area of 8.2 m²/g, a carbon content of 59.7 wt%, a bulk density of 1.184 g/cm³, a content of α iron phase + γ iron phase of 4.9 wt%, and a crystallite size of α iron of 85.8 nm. The amorphous carbon-metallic iron composite 22 does not belong to the amorphous carbon-metallic iron composite according to the present invention because the content of α iron phase + γ iron phase is less than 7.5 wt%.

Table 1 shows the production conditions and physical property values of each precursor, where "S_{BET} RAW Fe" and "S_{BET} precursor" denote specific surface areas of Fe raw material and precursor respectively. Table 2 shows the production conditions and physical property values of each amorphous carbon-metallic iron composite.

**[Table 1]**

| | COMPOUNDING PROCESS | | | | | | | | PRECURSOR | | | |
|---|---|---|---|---|---|---|---|---|---|---|---|---|
| PRECURSOR | D50 RAW C | RAW Fe | S_{BET} RAW Fe | MATERIAL FOR PRETREATMENT | C IN MIXED POWDER | Fe IN MIXED POWDER | ADDED MATERIAL | BULK DENSITY (A) OF MIXED POWDER | S_{BET} PRECURSOR | BULK DENSITY (B) OF PRECURSOR | RATIO (B)/(A) | D50 |
| | [*µ*m] | | [m²/g] | [kg] | [kg] | [kg] | [kg] | [g/cm³] | [m²/g] | [g/cm³] | | [*µ*m] |
| 1 | 19.4 | HEMATITE | 105 | - | 10.4 | 10.4 | C:5.2 | 0.462 | 6.9 | 0.951 | 2.059 | 53.02 |
| 2 | 19.4 | HEMATITE | 105 | - | 10.4 | 10.4 | C:5.2 | 0.459 | 11.1 | 0.945 | 2₋059 | 52.27 |
| 3 | 19.4 | HEMATITE | 105 | - | 10.4 | 10.4 | C:5.2 | 0.463 | 16.2 | 0.927 | 2.003 | 37.90 |
| 4 | 18.5 | HEMATITE | 103 | - | 1.2 | 1.2 | C:0.6 | 0.461 | 1.3 | 0.962 | 2.084 | 42.04 |
| 6 | 19,0 | HEMATITE | 107 | - | 1.8 | 1.2 | - | 0.480 | 1.2 | 0.984 | 2.049 | 40.22 |
| 8 | 18.2 | HEMATITE | 107 | - | 1.8 | 1.2 | - | 0.479 | 4.0 | 1.017 | 2.122 | 47.73 |
| 10 | 18.5 | GOETHITE | 6.9 | - | 1.2 | 1.2 | C:0.6 | 0.405 | 0.5 | 0.994 | 2.454 | 60.65 |
| 13 | 18.5 | HEMATITE | 103 | - | 1.3 | 1.5 | C:0.4 | 0.417 | 0.7 | 1.052 | 2.207 | *47.48* |
| 14 | 18.5 | HEMATITE | 103 | - | 1.5 | 1.5 | - | 0.479 | 5.4 | 1.058 | 2.209 | 61.20 |
| 15 | 19.4 | HEMATITE | 105 | - | 10.4 | 10.4 | C:5.2 | 0.459 | 11.1 | 0.945 | 2.059 | 52.27 |
| 16 | 19.4 | HEMATITE | 105 | - | 10.4 | 10.4 | C:5.2 | 0.460 | 17.2 | 0.911 | 1.980 | 36.81 |
| 17 | 19.4 | HEMATITE | 105 | - | 10.4 | 10.4 | C:5.2 | 0.463 | 16.2 | 0.927 | 2.003 | 37.90 |
| 18 | 19.0 | HEMATITE | 107 | - | 1.8 | 0.6 | Fe:0.6 | 0.501 | 1.9 | 0.995 | 1.986 | 43.54 |
| 19 | 19.4 | HEMATITE | 105 | - | 10.4 | 10.4 | C:5.2 | 0.460 | 17.3 | 0.929 | 2.018 | 36.36 |
| 20 | 19.4 | HEMATITE | 105 | - | 10.4 | 10.4 | C:5.2 | 0.462 | 14.8 | 0.939 | 2.032 | 40.15 |
| 22 | 18.5 | HEMATITE | 103 | C:0.3 | 1.5 | 1.2 | - | 0.465 | 1.3 | 0.977 | 2.100 | 48.47 |

**[Table 2]**

| | PRECURSOR | FIRING CONDITION | AMORPHOUS CARBON-METALLIC IRON COMPOSITE | | | | | | |
|---|---|---|---|---|---|---|---|---|---|
| COMPOSITE | PRECURSOR | HEATING TEMPERATURE | S_{BET} | BULK DENSITY | CARBON CONTENT | *α*-Fe CONTENT | *γ*-Fe CONTENT | *α*-Fe +*γ*-Fe | *α*-Fe CRYSTALLITE SIZE |
| | | [°C] | [m²/g] | [g/cm³] | [wt%] | [wt%] | [wt%] | [wt%] | [nm] |
| 1 | 1 | 800 | 29.6 | 1.110 | 64.4 | 20.9 | 3.6 | 24.6 | 104.3 |
| 2 | 2 | 800 | 28.5 | 1.125 | 62.5 | 16.2 | 2.1 | 18.3 | 127.1 |
| 3 | 3 | 800 | 49.5 | 1.002 | 63.3 | 28.4 | 8.3 | 36.7 | 133.5 |
| 4 | 4 | 800 | 5.6 | 1.118 | 66.8 | 16.5 | 4.8 | 21.4 | 51.0 |
| 5 | 4 | 850 | 13.9 | 1.111 | 68.5 | 13.6 | 17.8 | 31.5 | 55.0 |
| 6 | 6 | 750 | 13.9 | 1.109 | 64.1 | 17.4 | 6.2 | 23.7 | 49.9 |
| 7 | 6 | 800 | 13.5 | 1.117 | 65.1 | 15.7 | 14.1 | 29.8 | 51.8 |
| 8 | 8 | 750 | 7.4 | 1.124 | 64.7 | 14.1 | 4.8 | 18.9 | 55.6 |
| 9 | 8 | 800 | 20.9 | 1.126 | 60.9 | 13.0 | 4.0 | 17.0 | 62.3 |
| 10 | 10 | 800 | 8.2 | 1.139 | 66.3 | 15.0 | 13.7 | 28.7 | 115.5 |
| 11 | 10 | 850 | 2 | 1.171 | 64.5 | 24.3 | 0.0 | 24.3 | 112.6 |
| 12 | 10 | 800 | 2₋9 | 1.157 | 63.9 | 20.4 | 12.5 | 32.9 | 98.1 |
| 13 | 13 | 800 | 18 | 1.134 | 57.9 | 19.1 | 17.1 | 36.3 | 56.1 |
| 14 | 14 | 800 | 31.4 | 1.221 | 51.0 | 15.9 | 3.3 | 19.2 | 17.4 |
| 15 | 15 | 800 | 27 | 1.122 | 61.9 | 12.8 | 1.2 | 14.0 | 135.7 |
| 16 | 16 | 800 | 49.3 | 1.018 | 64.4 | 28.9 | 6.8 | 35.6 | 137.0 |
| 17 | 17 | 800 | 48.3 | 1.019 | 63.4 | 29.0 | 7.6 | 36.6 | 136.5 |
| 18 | 18 | 800 | 5 | 1.145 | 63.1 | 10.1 | 0.0 | 10.1 | 60.1 |
| 19 | 19 | 800 | 44.2 | 1.023 | 64.4 | 29.5 | 6.1 | 35.6 | 140.7 |
| 20 | 20 | 800 | 31.3 | 1.108 | 61.7 | 16.1 | 2.4 | 18.4 | 145.8 |
| 21 | 18 | 750 | 1.9 | 1.178 | 60.6 | 4.8 | 0.0 | 4.8 | 69.2 |
| 22 | 22 | 750 | 8.2 | 1.184 | 59.7 | 4.9 | 0.0 | 4.9 | 85.8 |

### <Amorphus carbon-metallic iron composite 23>

By mixing 16.9 kg of the amorphus carbon-metallic iron composite 1,8.2 kg of the amorphous carbon-metallic iron composite 16, 4.5 kg of the amorphous carbon-metallic iron composite 21, and 15.5 kg of the amorphous carbon-metallic iron composite 22, an amorphous carbon-metallic iron composite 23 was obtained. The amorphous carbon-metallic iron composite 23 had a BET specific surface area of 37.7 m²/g, a carbon content of 64.2 wt%, a bulk density of 1.053 g/cm³, a content of α iron phase + γ iron phase of 29.0 wt%, and a crystallite size of α iron of 126.8 nm.

### <Amorphous carbon-metallic iron composite 24>

By mixing 10.0 kg of the amorphous carbon-metallic iron composite 2, 11.0 kg of the amorphous carbon-metallic iron composite 3, 0.9 kg of the amorphous carbon-metallic iron composite 15, 7.0 kg of the amorphous carbon-metallic iron composite 17, 0.8 kg of the amorphous carbon-metallic iron composite 21, and 3.0 kg of the amorphous carbon-metallic iron composite 22, an amorphous carbon-metallic iron composite 24 was obtained. The amorphous carbon-metallic iron composite 24 had a BET specific surface area of 40.0 m²/g, a carbon content of 62.9 wt%, a bulk density of 1.051 g/cm³, a content of α iron phase + γ iron phase of 29.4 wt%, and a crystallite size of α iron of 126.0 nm.

Among the amorphous carbon-metallic iron composites, amorphous carbon-metallic iron composite dispersions were prepared using the amorphous carbon-metallic iron composites 1, 3, 4, 6 to 10, 15, 16, and 21 to 24, and TCE decomposition rates in the dispersions were measured. Table 3 and Fig. 1 show TCE decomposition evaluation and TCE decomposition rate, where "S_{BET}" denotes specific surface area of composite.

**[Table 3]**

| | COMPOSITE | C CONTENT | *α*-Fe + *γ*-Fe CONTENT | S_{BET} | *α*-Fe CRYSTALLITE SIZE | BULK DENSITY | TCE DECOMPOSITION |
|---|---|---|---|---|---|---|---|
| | | [wt%] | [wt%] | [m²/g] | [nm] | [g/cm³] | |
| EXAMPLE1 | 1 | 64.4 | 24.6 | 29.6 | 104.3 | 1.110 | GOOD |
| EXAMPLE2 | 3 | 63.3 | 36.7 | 49.5 | 133.5 | 1.002 | GOOD |
| EXAMPLE3 | 4 | 66.8 | 21.4 | 5.6 | 51.0 | 1.118 | GOOD |
| EXAMPLE4 | 6 | 64.1 | 23.7 | 13.9 | 49.9 | 1,109 | GOOD |
| EXAMPLE5 | 7 | 65.1 | 29.8 | 13.5 | 51.8 | 1.117 | GOOD |
| EXAMPLE6 | 8 | 64.1 | 18.9 | 1.4 | 55.6 | 1.124 | GOOD |
| EXAMPLE7 | 9 | 60.9 | 17.0 | 20.9 | 62.3 | 1.126 | GOOD |
| EXAMPLE8 | 10 | 66.3 | 28.7 | 8.2 | 115.5 | 1.139 | GOOD |
| EXAMPLE9 | 23 | 64.2 | 29.0 | 37.7 | 126.8 | 1.053 | GOOD |
| EXAMPLE10 | 24 | 62.9 | 29.4 | 40.0 | 126.0 | 1.051 | GOOD |
| EXAMPLE11 | 15 | 81.8 | 14.0 | 27.0 | 135.7 | 1.122 | FAIR |
| EXAMPLE12 | 16 | 64.4 | 35.6 | 49.3 | 137.0 | 1.018 | FAIR |
| COMPARATIVE1 | 21 | 60.6 | 4.8 | 1.9 | 69.2 | 1.178 | BAD |
| COMPARATIVE2 | 22 | 59.7 | 4.9 | 8.2 | 85.8 | 1.184 | BAD |

As shown in Fig. 1, in Example 4 in which the amorphous carbon-metallic iron composite 6 is used and in Example 8 in which the amorphous carbon-metallic iron composite 10 is used, the TCE decomposition rate was maintained to be high even after a lapse of 100 hours. Further, TCE was continuously decomposed even after a lapse of 200 hours, and the TCE concentration at the time of 355 hours was 0.0043 mg/L.

On the other hand, in Comparative Example 1 in which the amorphous carbon-metallic iron composite 21 is used, the TCE decomposition rate decreased after a lapse of 100 hours. Further, the TCE concentration at the time of 355 hours was 0.0411 mg/L, and was about 10 times higher than the concentrations of Examples 4 and 8.

As a result of measuring the TCE decomposition rate using the amorphous carbon-metallic iron composite 24 in powder form, the TCE concentration was 0.451 mg/L at 287 hours after the start of the reaction, and the activity lasted over a long period of time as seen from the TCE concentrations of 0.333 mg/L at 792 hours (33 days) and 0.0059 mg/L at 1536 hours (64 days), and eventually the TCE concentration less than 0.01 mg/L was reached.

Using the amorphous carbon-metallic iron composite 13, removal rates of organic fluorine compounds in the amorphous carbon-metallic iron composite powder and in the amorphous carbon-metallic iron composite dispersion were measured. In the purification treatment of organic fluorine compounds, using the amorphous carbon-metallic iron composite powder, concentrations of PFOS, PFOA and PFHxS after 1 hour were 0.5 µg/L, 2.4 µg/L, and 12.2 µg/L, respectively. In the purification treatment of organic fluorine compounds not including the amorphous carbon-metallic iron composite powder, concentrations of PFOS, PFOA and PFHxS after 1 hour were all 100 µg/L and did not change at all.

Also, in the purification treatment of organic fluorine compounds using the amorphous carbon-metallic iron composite dispersion, concentrations of PFOS, PFOA, and PFHxS after two weeks were 0.008 µg/L, 0.23 µg/L, and 1.2 µg/L, respectively.

It was confirmed that concentration of the organic fluorine compounds can be reduced when the amorphous carbon-metallic iron composite according to the present invention is used.

### INDUSTRIAL APPLICABILITY

The amorphous carbon-metallic iron composite according to the present invention is also suitable as an insolubilizing agent for heavy metals contained in soil or groundwater and as a catalyst for catalytic hydrogenation reaction.

## Claims

1. An amorphous carbon-metallic iron composite comprising amorphous carbon and an iron compound containing at least α iron phase, wherein
carbon content in the amorphous carbon-metallic iron composite is 45% by weight or more and 75% by weight or less, and
a sum of α iron phase content and austenite (γ iron) phase content in the amorphous carbon-metallic iron composite is 7.5% by weight or more and 55% by weight or less.

2. The amorphous carbon-metallic iron composite as claimed in claim 1, wherein the amorphous carbon-metallic iron composite has a BET specific surface area of 0.5 m²/g or more and 80 m²/g or less.

3. The amorphous carbon-metallic iron composite as claimed in claim 1 or 2, wherein the α iron has a crystallite size of 40 nm or more and 140 nm or less.

4. The amorphous carbon-metallic iron composite as claimed in claim 1 or 2, wherein the amorphous carbon-metallic iron composite has a bulk density of 0.9 g/cm³ or more and 1.3 g/cm³ or less.

5. A purification treatment method for soil and groundwater, comprising subjecting soil contaminated with organohalogen compounds or groundwater contaminated with organohalogen compounds to a purification treatment using the amorphous carbon-metallic iron composite as claimed in claim 1 or 2.

6. An insolubilizing agent for heavy metals contained in soil or groundwater, comprising the amorphous carbon-metallic iron composite as claimed in claim 1 or 2, as an active ingredient.

7. A method for producing the amorphous carbon-metallic iron composite as claimed in claim 1 or 2, comprising:
a precursor producing step of softening a carbon raw material by imparting energy to produce a precursor that embeds the iron raw material; and
a heat treatment step of heat treating the precursor to reduce at least part of the iron raw material.

8. A method for producing a purifying agent for soil and groundwater, comprising:
a precursor producing step of softening a carbon raw material by imparting energy to produce a precursor that embeds the iron raw material; and
a heat treatment step of heat treating the precursor to reduce at least part of the iron raw material.
